# EUROPEAN PATENT APPLICATION

(11) **EP 4 435 623 A1**
(43) Date of publication of application: **25.09.2024**
(21) Application number: 22894803.0
(22) Date of filing: 15.11.2022
(51) Int. Cl.: G06F 16/23, G06F 16/29, G06F 16/9537

(54) **MAP UPDATE METHOD AND APPARATUS THEREOF**

(30) Priority: 18.11.2021 CN 202111372383
(71) Applicant: Beijing CHJ Information Technology Co., Ltd., Beijing 101399 (CN)
(72) Inventor: WU, Wei, Beijing 101399 (CN)
(74) Representative: Maiwald GmbH
(86) International application number: PCT/CN2022/132089
(87) International publication number: WO 2023/088270

(57) **Abstract**

Provided are a map update method and apparatus, and an electronic device and a storage medium. The method comprises: determining a target vehicle on a target road, which vehicle exits an autonomous driving mode; acquiring driving data of the target vehicle in a non-autonomous driving mode; clustering the driving data to generate at least one clustering cluster; and updating, according to the clustering cluster, an autonomous driving enable state of each location point of the target road on a map, wherein the autonomous driving enable state is used for indicating whether the location point allows a passing vehicle to enter the autonomous driving mode.

## Description

### CROSS-REFERENCE TO RELATED APPLICATIONS

This application is based on and claims priority to Chinese Patent Application No. 202111372383.1, filed on November 18, 2021, the entire contents of which are incorporated herein by reference.

### TECHNICAL FIELD

The disclosure relates to the field of intelligent transportation technologies, and specifically to a method and an apparatus for updating a map, an electronic device and a storage medium.

### BACKGROUND

At present, a vehicle having an autonomous driving function is often provided with a high-precision map, and an operational design domain (ODD) on the high-precision map can assist an autonomous driving process of the vehicle. In the related art, the ODD of the high-precision map used in autonomous driving is static. No matter how the real world changes, the ODD does not change as long as the map data does not change. And update of the high-precision map is very slow, which causes great safety hazards to an autonomous driving operation of the user.

### SUMMARY

A first purpose of the present disclosure is to propose a method for updating a map.

A second purpose of the present disclosure is to propose an apparatus for updating a map.

A third purpose of the present disclosure is to propose an electronic device.

A fourth purpose of the present disclosure is to propose a non-transitory computer-readable storage medium.

A fifth purpose of the present disclosure is to propose a computer program product.

A sixth purpose of the present disclosure is to propose a computer program.

In order to achieve the above purposes, a method for updating a map is provided in a first aspect of implementation of the disclosure, and includes: determining target vehicles exiting an autonomous driving mode on a target road; acquiring driving data of the target vehicles in a non-autonomous driving mode; generating at least one cluster by clustering the driving data; and updating an autonomous driving enabling state of each location point of the target road on the map according to the at least one cluster, in which the autonomous driving enabling state is configured to indicate whether a passing vehicle is allowed to enter the autonomous driving mode at the location point.

In an embodiment of the disclosure, determining the target vehicles exiting the autonomous driving mode on the target road includes: acquiring a candidate vehicle exiting the autonomous driving mode traveling on a road network; acquiring a driving trajectory of the candidate vehicle; and acquiring a target vehicle by matching the driving trajectory with the target road.

In an embodiment of the disclosure, the driving data includes location points of the target vehicles on the target road when existing the autonomous driving mode and trigger conditions for exiting the autonomous driving mode, in which generating the at least one cluster by clustering the driving data includes: acquiring target vehicles at a same location position and with a same trigger condition as a cluster by comparing driving data of each of the target vehicles.

In an embodiment of the disclosure, updating the autonomous driving enabling information of the target road on the map according to the cluster further includes: acquiring a number of the target vehicles in the cluster; and determining an autonomous driving enabling state of a location point corresponding to the cluster according to the number of the target vehicles.

In an embodiment of the disclosure, determining the autonomous driving enabling state of the location point corresponding to the cluster according to the number of the target vehicles includes: in response to the number of the target vehicles being greater than a set number, determining that the autonomous driving enabling state of the location point is a non-enabling state; and in response to the number of the target vehicles being less than a set number, acquiring road state information of the location point, and determining the autonomous driving enabling state of the location point based on a road state.

In an embodiment of the disclosure, determining the autonomous driving enabling state of the location point based on the road state includes: in response to the road state information indicating that a road anomaly occurs on the location point, determining that the autonomous driving enabling state of the location point is the non-enabling state; and in response to the road state information indicating that a road anomaly does not occur on the location point, determining that the autonomous driving enabling state of the location point is an enabling state.

In an embodiment of the disclosure, the method for updating the map further includes: identifying continuous target location points from non-enabling location points determined, and obtaining at least one location area by merging the target location points; and generating map update information based on discontinuous location points on remaining locations and an autonomous driving enabling state of the at least one location area, and sending the map update information to a vehicle.

A method for updating a map is provided in a first aspect of implementation of the disclosure, and includes: in response to a vehicle exiting an autonomous driving mode, collecting driving data in a non-autonomous driving mode, and sending the driving data to a cloud server; and receiving map update information generated by the cloud server according to the driving data, and updating an autonomous driving enabling state of each location point of a target road on the map based on the map update information, in which the autonomous driving enabling state is configured to indicate whether a passing vehicle is allowed to enter the autonomous driving mode at the location point.

In an embodiment of the present disclosure, in the method for updating the map, the driving data includes location points of the target vehicles on the target road when existing the autonomous driving mode and trigger conditions for exiting the autonomous driving mode.

An apparatus for updating a map is provided in a second aspect of implementation of the disclosure, and includes: a determining module, configured to determine target vehicles exiting an autonomous driving mode on a target road; an acquiring module, configured to acquire driving data of the target vehicles in a non-autonomous driving mode; a clustering module, configured to generate at least one cluster by clustering the driving data; and an update module, configured to update an autonomous driving enabling state of each location point of the target road on the map according to the at least one cluster, in which the autonomous driving enabling state is configured to indicate whether a passing vehicle is allowed to enter the autonomous driving mode at the location point.

In an embodiment of the disclosure, the determining module is further configured to: acquire a candidate vehicle exiting the autonomous driving mode traveling on a road network; acquire a driving trajectory of the candidate vehicle; and acquire a target vehicle by matching the driving trajectory with the target road.

In an embodiment of the disclosure, the update module is further configured to: acquire target vehicles at a same location position and with a same trigger condition as a cluster by comparing driving data of each of the target vehicles.

In an embodiment of the disclosure, the update module is further configured to: acquire a number of the target vehicles in the cluster; and determine an autonomous driving enabling state of a location point corresponding to the cluster according to the number of the target vehicles.

In an embodiment of the disclosure, the update module is further configured to: in response to the number of the target vehicles being greater than a set number, determine that the autonomous driving enabling state of the location point is a non-enabling state; and in response to the number of the target vehicles being less than a set number, acquire road state information of the location point, and determine the autonomous driving enabling state of the location point based on a road state.

In an embodiment of the disclosure, the update module is further configured to: in response to the road state information indicating that a road anomaly occurs on the location point, determine that the autonomous driving enabling state of the location point is the non-enabling state; and in response to the road state information indicating that a road anomaly does not occur on the location point, determine that the autonomous driving enabling state of the location point is an enabling state.

In an embodiment of the disclosure, the update module is further configured to: identify continuous target location points from non-enabling location points determined, and obtain at least one location area by merging the target location points; and generate map update information based on discontinuous location points on remaining locations and an autonomous driving enabling state of the at least one location area, and send the map update information to a vehicle.

An apparatus for updating a map is provided in a second aspect of implementation of the disclosure, and includes: in response to a vehicle exiting an autonomous driving mode, collecting driving data in a non-autonomous driving mode, and sending the driving data to a cloud server; and receiving map update information generated by the cloud server according to the driving data, and updating an autonomous driving enabling state of each location point of a target road on the map based on the map update information, in which the autonomous driving enabling state is configured to indicate whether a passing vehicle is allowed to enter the autonomous driving mode at the location point.

In an embodiment of the present disclosure, the driving data includes location points of the target vehicles on the target road when existing the autonomous driving mode and trigger conditions for exiting the autonomous driving mode.

In order to achieve the above purposes, an electronic device is provided in a third aspect of implementation of the disclosure, and includes: at least one processor; and a memory communicatively connected to the at least one processor; in which the memory stores instructions executable by the at least one processor, and when the instructions are executed by the at least one processor, the method for updating a map according to the first aspect of any one embodiment of the disclosure is implemented.

In order to achieve the above purposes, a non-transitory computer-readable storage medium storing computer instructions is provided in a fourth aspect of implementation of the disclosure, in which the computer instructions are configured to implement the method for updating a map according to the first aspect of any one embodiment of the disclosure.

In order to achieve the above purposes, a computer program product is provided in a fifth aspect of implementation of the disclosure, and includes a computer program, in which when the computer program is executed by a processor, the method for updating a map according to the first aspect of any one embodiment of the disclosure is implemented.

In order to achieve the above purposes, a computer program storing a computer program code is provided in a sixth aspect of implementation of the disclosure. When the computer program code runs on a computer, the computer is caused to perform the method for updating a map according to the first aspect of any one embodiment of the disclosure.

### BRIEF DESCRIPTION OF THE DRAWINGS

FIG. 1 is a schematic diagram of a method for updating a map according to an implementation of the disclosure.
FIG. 2 is a schematic diagram of another method for updating a map according to an implementation of the disclosure.
FIG. 3 is a schematic diagram of another method for updating a map according to an implementation of the disclosure.
FIG. 4 is a schematic diagram of another method for updating a map according to an implementation of the disclosure.
FIG. 5 is a schematic diagram of another method for updating a map according to an implementation of the disclosure.
FIG. 6 is a schematic diagram of a method for updating a map according to an implementation of the disclosure.
FIG. 7 is a block diagram of an apparatus for updating a map according to an implementation of the disclosure.
FIG. 8 is a block diagram of another apparatus for updating a map according to an implementation of the disclosure.
FIG. 9 is a block diagram of an electronic device according to an implementation of the disclosure.

### DETAILED DESCRIPTION

Embodiments of the disclosure will be described and examples of the embodiments are illustrated in the drawings. The same or similar elements and the elements having the same or similar functions are denoted by like reference numerals throughout the descriptions. The embodiments described herein with reference to drawings are explanatory, serve to explain the disclosure, and are not construed to limit the disclosure.

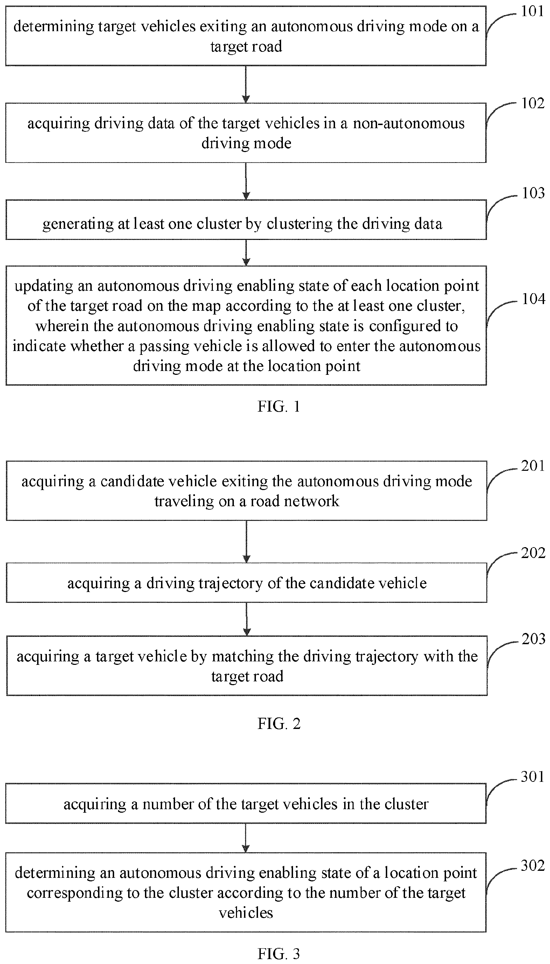

FIG. 1 is a schematic diagram of a method for updating a map according to an embodiment of the disclosure. As illustrated in FIG. 1, the method for updating the map includes steps 101 to 104.

At 101, target vehicles exiting an autonomous driving mode on a target road are determined.

Specifically, a vehicle may be driven using an autonomous driving function only in an operational design domain (ODD) of a high-precision map. In related art, an autonomous driving vehicle can obtain a sensing capability beyond detection range of a common vehicle sensor via the ODD of the high-precision map, and a plurality of complex function scenarios are expanded.

In the embodiments of the present disclosure, reasons why the vehicle exits the autonomous driving mode may be various, and may include user take-over, function anomaly exit, positioning failure, sensing failure, etc. in an autonomous driving process.

At 102, driving data of the target vehicles in a non-autonomous driving mode is acquired.

In an embodiment of the disclosure, when the vehicle enters the non-autonomous driving mode from the autonomous driving mode, the driving data may be uploaded to a server via a positioning system of the vehicle.

In some embodiments, the target vehicles may upload the driving data of the target vehicles in the non-autonomous driving mode via a navigation map application (APP).

It needs to be noted that, after the driving data of the target vehicles in the non-autonomous driving mode is acquired, the driving data needs to be desensitized. That is, sensitive data including user information in the driving data is deformed to protect private information of the user.

At 103, at least one cluster is generated by clustering the driving data.

After the driving data of the target vehicles in the non-autonomous driving mode is acquired, the driving data needs to be analyzed. In an embodiment of the disclosure, the target vehicles at different positions and with different trigger conditions may be analyzed by clustering the driving data.

In an embodiment of the disclosure, target vehicles at a same location position and with a same trigger condition may be acquired as a cluster by comparing driving data of each of the target vehicles. Therefore, whether autonomous driving switching is performed at the position point due to the user's own reason can be determined by analyzing and horizontally comparing the target vehicles at a same location position point and with a same trigger condition, which greatly improves reliability of data.

At 104, an autonomous driving enabling state of each location point of the target road on the map is updated according to the at least one cluster. The autonomous driving enabling state is configured to indicate whether a passing vehicle is allowed to enter the autonomous driving mode at the location point.

It needs to be noted that, there are a plurality of location points on the target road. The location points may be pre-determined, or may be defined on the map according to a certain rule. For example, one location point may be defined at intervals on the target road, or a location point may be set at a key location (e.g. a bridge, an intersection) of the target road, etc., which is not limited here, and may be set according to actual conditions.

In an embodiment of the disclosure, after the cluster of the driving data is acquired, different clusters at different locations may be analyzed, so that an enabling sate of the location point is updated.

Further, an updated map in the server may be sent the vehicle for updating the map in the vehicle.

In an embodiment of the disclosure, the cluster may be analyzed by the server to generate configuration information corresponding to the cluster, and update the map though the configuration information.

In some embodiments, the driving data of the cluster may be analyzed manually, to determine whether the location point corresponding to the cluster possesses an autonomous driving condition, and to generate configuration information. Further, the cloud may update the map according to the configuration information and send an updated map to the vehicle after acquiring the configuration information. Therefore, dynamic adjustment of the ODD is achieved.

It needs to be noted that, an ODD update period of the high-precision map is not fixed. For example, the update period may be 12 hours, 24 hours, 48 hours, etc. The update period is specifically set according to the actual requirement, which is not limited here. Therefore, the ODD may be dynamically updated by setting the update time, which enhances timeliness of the map, and increases safety of autonomous driving of the user.

In the embodiments of the disclosure, the target vehicles exiting the autonomous driving mode on the target road are determined first, the driving data of the target vehicles in the non-autonomous driving mode is acquired, and the at least one cluster is generated by clustering the driving data, and finally, the autonomous driving enabling state of each location point of the target road on the map is updated according to the at least one cluster. The autonomous driving enabling state is configured to indicate whether the passing vehicle is allowed to enter the autonomous driving mode at the location point. Therefore, in a manner of classifying the vehicles exiting the autonomous driving mode on the road, whether the road possesses the autonomous driving condition can be analyzed better, which dramatically increases safety of autonomous driving of the user.

In order to determine target vehicles in an abnormal driving state on the target road better, a further explanation may be made in FIG. 2. The method includes 201-203.

At 201, a candidate vehicle exiting the autonomous driving mode traveling on a road network is acquired.

In an embodiment of the disclosure, the driving data may be uploaded to the server through a positioning system of the vehicle, and whether the vehicle is a candidate vehicle exiting the autonomous driving mode may be analyzed according to the driving data.

In some embodiments, after the vehicle exits the autonomous driving mode, the driving data of the vehicle may be uploaded to the server via a navigation map APP, and the vehicle is determined as a candidate vehicle.

At 202, the driving trajectory of the candidate vehicle is acquired.

In an embodiment of the disclosure, the driving trajectory of the vehicle may be uploaded to the server via a positioning system of the candidate vehicle, to acquire the driving trajectory of the candidate vehicle.

In some embodiments, the server may be connected to a road information base and/or a traffic management platform, and acquire the driving trajectory of the candidate vehicle from the road information base and/or the traffic management platform.

In some embodiments, the driving trajectory of the candidate vehicle may be uploaded to the server via a navigation map APP installed on the candidate vehicle.

At 203, a target vehicle is acquired by matching the driving trajectory with the target road.

In an embodiment of the disclosure, the driving trajectory of the candidate vehicle is matched with a shape of the target road. Further, when the driving trajectory of the candidate vehicle is same as the shape of the target road, it may be considered that the candidate vehicle travels on the target road, and the candidate vehicle is a target road.

It needs to be noted that, a match value between the driving trajectory and the shape of the target road may be acquired first, and the match value may be compared with a match threshold, to determine whether the candidate vehicle is a target vehicle. For example, the match threshold may be 0.9. When the match value between the driving trajectory and the shape of the target road is greater than or equal to 0.9, it is considered that the candidate vehicle is a target vehicle, and when the match value between the driving trajectory and the shape of the target road is less than 0.9, it is considered that the candidate vehicle is not a target vehicle.

In an embodiment of the disclosure, the candidate vehicle exiting the autonomous driving mode traveling on the road network is acquired first, the driving trajectory of the candidate vehicle is acquired, and finally the target vehicles is acquired by matching the driving trajectory with the target road. Therefore, the candidate vehicle is filtered based on the road trajectory, to reduce subsequent processing of data and reduces a processing cost.

In the above embodiments, the autonomous driving enabling information of the target road on the map is updated according to the cluster, and may be further explained in FIG. 3. Following steps 301 to 302 as illustrated in FIG. 3 are included.

At 301, a number of the target vehicles in the cluster is acquired.

In an embodiment of the disclosure, a clustering process may refer to steps in the above embodiments.

Further, after the at least one cluster is generated, statistical analysis may be performed on the cluster, to acquire the number of the target vehicles in the cluster.

At 302, an autonomous driving enabling state of a location point corresponding to the cluster is determined according to the number of the target vehicles.

In an embodiment of the disclosure, in response to the number of the target vehicles being greater than a set number, it is determined that the autonomous driving enabling state of the location point is a non-enabling state, and the location point does not possess an autonomous driving condition; and in response to the number of the target vehicles being less than a set number, road state information of the location point is acquired, and the autonomous driving enabling state of the location point is determined based on a road state.

For example, the set number may be 5. When the number of the target vehicles in the cluster is greater than or equal to 5, it may be considered that the location point corresponding to the cluster does not possess the autonomous driving condition, and when the number of the target vehicles in the cluster is less than 5, data analysis continues to be performed on the cluster according to steps in the foregoing embodiment.

In the embodiments of the disclosure, the number of the target vehicles in the cluster is acquired first, then the autonomous driving enabling state of the location point corresponding to the cluster is determined according to the number of the target vehicles. Therefore, whether the location point possesses the autonomous driving condition is determined according to the number of the target vehicles in the cluster, which can reduce cost of data processing.

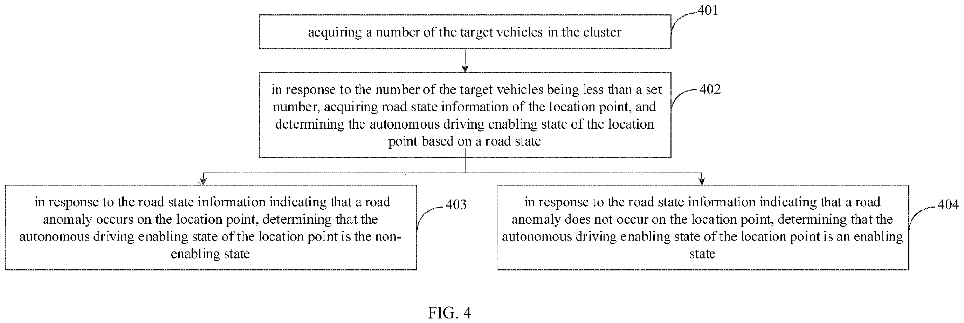

In the above embodiments, the autonomous driving enabling state of the location point may be determined based on the road condition, and may be explained in FIG. 4. Following steps 401 to 404 are included as illustrated in FIG. 4.

At 401, a number of the target vehicles in the cluster is acquired.

Specifically refer to steps in the above embodiments, which will not be repeated here.

At 402, in response to the number of the target vehicles being less than a set number, road state information of the location point is acquired, and the autonomous driving enabling state of the location point is determined based on a road state.

In an embodiment of the present disclosure, a sever may be connected to a road information base and/or a traffic management platform, acquire the road state information of the location point from the road information base and/or the traffic management platform, and determine the autonomous driving enabling state of the location point based on the road state.

In some embodiments, the road state information of the location point may be acquired according to an information collection device of the vehicle. For example, the information collection device may include a vehicle-mounted camera, a vehicle-mounted radar, etc.

At 403, in response to the road state information indicating that a road anomaly occurs on the location point, it is determined that the autonomous driving enabling state of the location point is the non-enabling state.

At 404, in response to the road state information indicating that a road anomaly does not occur on the location point, it is determined that the autonomous driving enabling state of the location point is an enabling state.

It should be noted that there may be a plurality of road anomalies. For example, the road anomalies may include road construction, traffic accidents, satellite unable to be positioned, etc. When the road state information of the location point is determined to be a road anomaly, it may be considered that the road does not possess an autonomous driving condition; when the road state information of the location point is determined to be a non-road anomaly, it may be deemed that the reason for switching autonomous driving to non-autonomous driving is the user's own reason, and the location point possesses the autonomous driving condition.

Further, the user's own reason may include the user voluntarily switching the autonomous driving to the non-autonomous driving, vehicle failure, etc.

In the embodiments of the disclosure, the number of the target vehicles in the cluster is acquired first, and in response to the number of the target vehicles being less than the set number, the road state information of the location point is acquired, and the autonomous driving enabling state of the location point is determined based on the road state. Finally, in response to the road state information indicating that a road anomaly occurs on the location point, it is determined that the autonomous driving enabling state of the location point is the non-enabling state, and in response to the road state information indicating that a road anomaly does not occur on the location point, it is determined that the autonomous driving enabling state of the location point is the enabling state. Therefore, the driving data is filtered based on the road state information, so that whether the location point possesses the autonomous driving condition can be determined, which increases safety and practicability of the map.

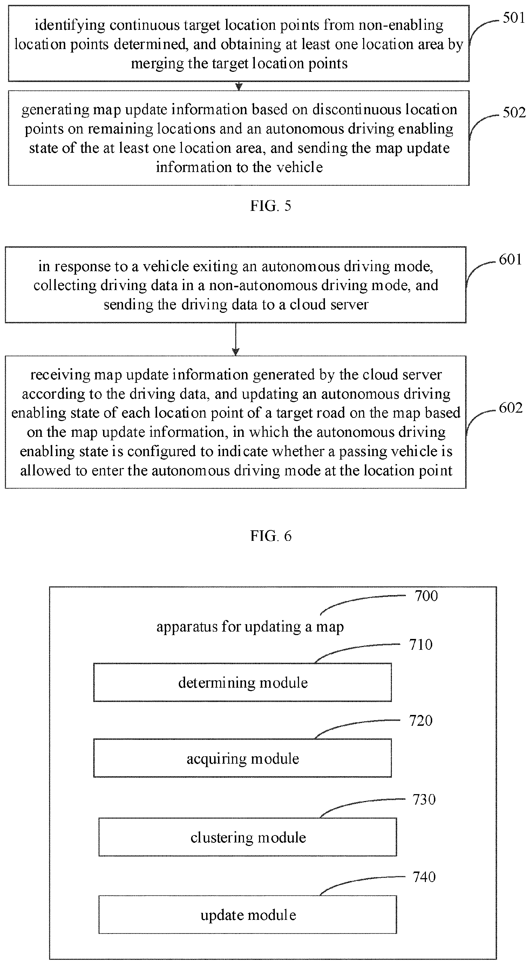

FIG. 5 is a schematic diagram of another example implementation of a method for updating a map according to an embodiment of the disclosure. As illustrated in FIG. 5, the method for updating the map includes steps 501 to 502.

At 501, continuous target location points are identified from non-enabling location points determined, and at least one location area is obtained by merging the target location points.

In an embodiment of the disclosure, when location points not possessing an autonomous driving condition are determined, data processing may be performed on the location points, and a location relationship among the location points may be analyzed.

In some embodiments, when an adjacent location point of a target location point is a location point not possessing an autonomous driving condition, an area of the location point is merged to form a continuous location area. The location area is a non-ODD, configuration data is generated, and the map is updated.

In some embodiments, when an adjacent location point of a target location point is a location point possessing the driving condition, a location area where the target location point is located is updated as the non-ODD.

At 502, map update information is generated based on discontinuous location points on remaining locations and an autonomous driving enabling state of the at least one location area, and the map update information is sent to the vehicle.

In the embodiments of the disclosure, the continuous target location points are identified from the non-enabling location points determined, and the at least one location area is obtained by merging the target location points; and the map update information is generated based on the discontinuous location points on the remaining locations and the autonomous driving enabling state of the at least one location area, and the map update information is sent to the vehicle. Therefore, the continuous location points can be merged as the continuous non-ODD by analyzing the non-enabling location points.

FIG. 6 is a schematic diagram of an example implementation of a method for updating a map according to an embodiment of the disclosure. As illustrated in FIG. 6, the method includes steps 601 to 602.

At 601, in response to a vehicle exiting an autonomous driving mode, driving data in a non-autonomous driving mode is collected and sent to a cloud server.

In an embodiment of the disclosure, in response to the vehicle exiting the autonomous driving mode, a vehicle sensor may collect the driving data of the vehicle and send the driving data of the vehicle to a navigation map APP, and the navigation map APP sends the driving data of the vehicle to the cloud server.

In some embodiments, after the vehicle has been driven through a complete non-ODD road, the driving data may be uploaded to the server.

In some embodiments, after the vehicle is in a non-driving state, complete driving data of the vehicle collected by the sensor may be updated to the server according to a sampling time sequence. Further, the server may match according to a current ODD map and collected driving data, to determine whether a current ODD road state needs to be updated.

At 602, map update information generated by the cloud server according to the driving data is received, and an autonomous driving enabling state of each location point of a target road on the map is updated based on the map update information. The autonomous driving enabling state is configured to indicate whether a passing vehicle is allowed to enter the autonomous driving mode at the location point.

It needs to be noted that, the driving data includes location points of the target vehicles on the target road when existing the autonomous driving mode and trigger conditions for exiting the autonomous driving mode.

Further, after the vehicle exits the autonomous driving mode, a location point where the vehicle recovers the autonomous driving mode needs to be collected. It may be considered that a target non-ODD is between the recover point and the location point where the vehicle exits the autonomous driving mode, which facilitates to recover the target non-ODD to an ODD subsequently for manual review, so that a target area is reduced, and a recovery cost is reduced. In the embodiments of the disclosure, first, in response to the vehicle exiting the autonomous driving mode, driving data in the non-autonomous driving mode is collected, and the driving data is sent to the cloud server. Then, the map update information generated by the cloud server according to the driving data is received, and the autonomous driving enabling state of each location point of the target road on the map is updated based on the map update information. The autonomous driving enabling state is configured to indicate whether the passing vehicle is allowed to enter the autonomous driving mode at the location point. Therefore, the driving data in the non-autonomous driving mode is collected and analyzed, and a state of the target road is updated, which increases security of autonomous driving of the user.

Further, when the autonomous driving vehicle is close to the non-ODD, a map APP may remind the autonomous driving vehicle, and a processor of the vehicle performs a corresponding operation. For example, downgrading the driving state of the vehicle, prompting to take over, pulling over, and the like may be performed.

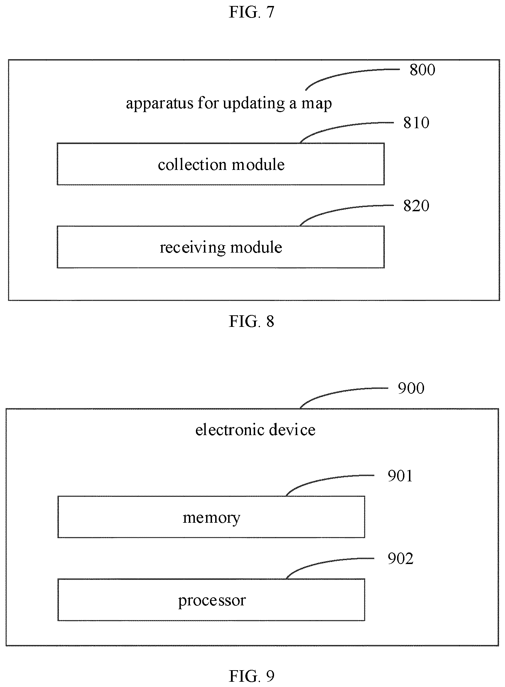

FIG. 7 is a block diagram of an apparatus for updating a map according to an embodiment of the disclosure. As illustrated in FIG. 7, an apparatus 700 for updating a map includes a determining module 710, an acquiring module 720, a clustering module 730, and an update module 740.

The determining module 710 is configured to determine target vehicles exiting an autonomous driving mode on a target road.

The acquiring module 720 is configured to acquire driving data of the target vehicles in non-autonomous driving mode.

The clustering module 730 is configured to generate at least one cluster by clustering the driving data.

The update module 740 is configured to update an autonomous driving enabling state of each location point of the target road on the map according to the at least one cluster. The autonomous driving enabling state is configured to indicate whether a passing vehicle is allowed to enter the autonomous driving mode at the location point.

In an embodiment of the disclosure, the determining module 710 is further configured to: acquire a candidate vehicle exiting the autonomous driving mode traveling on a road network; acquire a driving trajectory of the candidate vehicle; and acquire a target vehicle by matching the driving trajectory with the target road.

In an embodiment of the disclosure, the update module 740 is further configured to: acquire target vehicles at a same location position and with a same trigger condition as a cluster by comparing driving data of each of the target vehicles.

In an embodiment of the disclosure, the update module 740 is further configured to: acquire a number of the target vehicles in the cluster; and determine an autonomous driving enabling state of a location point corresponding to the cluster according to the number of the target vehicles.

In an embodiment of the disclosure, the update module 740 is further configured to: in response to the number of the target vehicles being greater than a set number, determine that the autonomous driving enabling state of the location point is a non-enabling state; and in response to the number of the target vehicles being less than a set number, acquire road state information of the location point, and determine the autonomous driving enabling state of the location point based on a road state.

In an embodiment of the disclosure, the update module 740 is further configured to: in response to the road state information indicating that a road anomaly occurs on the location point, determine that the autonomous driving enabling state of the location point is the non-enabling state; and in response to the road state information indicating that a road anomaly does not occur on the location point, determine that the autonomous driving enabling state of the location point is an enabling state.

In an embodiment of the disclosure, the update module 740 is further configured to: identify continuous target location points from non-enabling location points determined, and obtain at least one location area by merging the target location points; and generate map update information based on discontinuous location points on remaining locations and an autonomous driving enabling state of the at least one location area, and send the map update information to a vehicle.

FIG. 8 is a diagram illustrating an apparatus 800 for updating a map according to the disclosure. As illustrated in FIG. 8, the apparatus 800 includes a collection module 810 and a receiving module 820.

The collection module 810 is configured to, in response to a vehicle exiting an autonomous driving mode, collect driving data in a non-autonomous driving mode, and send the driving data to a cloud server.

The receiving module 820 is configured to receive map update information generated by the cloud server according to the driving data, and update an autonomous driving enabling state of each location point of a target road on the map based on the map update information. The autonomous driving enabling state is configured to indicate whether a passing vehicle is allowed to enter the autonomous driving mode at the location point.

In an embodiment of the present disclosure, the driving data includes location points of the target vehicles on the target road when existing the autonomous driving mode and trigger conditions for exiting the autonomous driving mode.

In order to implement the above embodiments, an electronic device 900 is further provided according to an embodiment of the disclosure. As illustrated in FIG. 9, the electronic device 900 includes a processor 901 and a memory 902 communicatively connected to the processor. The memory 902 stores instructions executable by at least one processor 901, and when the instructions are executed by the at least one processor, the method for updating a map according to the first aspect of embodiments of the present disclosure is implemented.

In order to implement the above purposes, a non-transitory computer-readable storage medium storing computer instructions is further provided according to an embodiment of the disclosure. The computer instructions are configured to cause a computer to implement the method for updating a map according to the first aspect of embodiments of the disclosure.

In order to implement the above purposes, a computer program product is provided according to an embodiment of the disclosure, and includes a computer program. When the computer program is executed by a processor, the method for updating a map according to the first aspect of embodiments of the disclosure is implemented.

In order to implement the above purposes, a computer program storing a computer executable code is provided according to an embodiment of the disclosure. When the computer program code runs on a computer, the computer is caused to perform the method for updating a map according to the first aspect of embodiments of the disclosure.

It needs to be noted that, explanation of the embodiments of the method for updating a map is applicable to the apparatus for updating a map, the non-transitory computer-readable storage medium, the electronic device, the computer program product and the computer program, which will not be repeated here.

In description of the present disclosure, it should be understood that an orientation or position relationship indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like is merely an orientation or position relationship shown in accompanying drawings, rather than indicating or implying that the referred apparatus or element must have a specific orientation to construct and operate in a specific orientation, and therefore, cannot be understood as a limitation to the present disclosure.

In addition, terms "first" and "second" used in the present disclosure are only for description purpose, and may not be understood as indicating or implying a relative importance or implying a number of technical features indicated by implication. Therefore, features limited with "first" and "second" may explicitly or implicitly include one or more of the features. In the description of the present disclosure, "a plurality of' means two or more than two, unless otherwise specified.

In descriptions of the specification, descriptions with reference to terms "one embodiment", "some embodiments", "an example", "a specific example", or "some examples", etc. mean specific features, structures, materials or characteristics described in conjunction with the embodiment or example are included in at least one embodiment or example of the present disclosure. The appearances of the above phrases in various places throughout the specification are not necessarily referring to the same embodiment or example of the disclosure. Moreover, specific features, structures, materials or characteristics described may be combined in any one or more embodiments or examples in a suitable manner. In addition, those skilled in the art may combine different embodiments or examples and characteristics of different embodiments or examples described in the specification without contradicting each other.

It should be understood that, notwithstanding the embodiments of the present disclosure are shown and described above, the above embodiments are exemplary in nature and shall not be construed as a limitation of the present disclosure. Those skilled in the art may change, modify, substitute and vary the above embodiments within the scope of the present disclosure.

All embodiments of the disclosure may be executed separately or in combination with other embodiments, and are considered within a protection scope of the disclosure.

## Claims

1. A method for updating a map, comprising:
determining target vehicles exiting an autonomous driving mode on a target road;
acquiring driving data of the target vehicles in a non-autonomous driving mode;
generating at least one cluster by clustering the driving data; and
updating an autonomous driving enabling state of each location point of the target road on the map according to the at least one cluster, wherein the autonomous driving enabling state is configured to indicate whether a passing vehicle is allowed to enter the autonomous driving mode at the location point.

2. The method according to claim 1, wherein determining the target vehicles exiting the autonomous driving mode on the target road comprises:
acquiring a candidate vehicle exiting the autonomous driving mode traveling on a road network;
acquiring a driving trajectory of the candidate vehicle; and
determining a target vehicle by matching the driving trajectory with the target road.

3. The method according to claim 1 or 2, wherein the driving data comprises location points of the target vehicles on the target road when existing the autonomous driving mode and trigger conditions for exiting the autonomous driving mode, wherein generating the at least one cluster by clustering the driving data comprises:
acquiring target vehicles at a same position and with a same trigger condition as a cluster by comparing driving data of each of the target vehicles.

4. The method according to any one of claims 1 to 3, wherein updating the autonomous driving enabling information of the target road on the map according to the cluster further comprises:
acquiring a number of the target vehicles in the cluster; and
determining an autonomous driving enabling state of a location point corresponding to the cluster according to the number of the target vehicles.

5. The method according to claim 4, wherein determining the autonomous driving enabling state of the location point corresponding to the cluster according to the number of the target vehicles comprises:
in response to the number of the target vehicles being greater than a set number, determining that the autonomous driving enabling state of the location point is a non-enabling state; and
in response to the number of the target vehicles being less than a set number, acquiring road state information of the location point, and determining the autonomous driving enabling state of the location point based on a road state.

6. The method according to claim 5, wherein determining the autonomous driving enabling state of the location point based on the road state comprises:
in response to the road state information indicating that a road anomaly occurs on the location point, determining that the autonomous driving enabling state of the location point is the non-enabling state; and
in response to the road state information indicating that a road anomaly does not occur on the location point, determining that the autonomous driving enabling state of the location point is an enabling state.

7. The method according to claim 6, further comprising:
identifying continuous target location points from non-enabling location points determined, and obtaining at least one location area by merging the target location points; and
generating map update information based on discontinuous location points on remaining locations and an autonomous driving enabling state of the at least one location area, and sending the map update information to a vehicle.

8. A method for updating a map, comprising:
in response to a vehicle exiting an autonomous driving mode, collecting driving data in a non-autonomous driving mode, and sending the driving data to a cloud server; and
receiving map update information generated by the cloud server according to the driving data, and updating an autonomous driving enabling state of each location point of a target road on the map based on the map update information, wherein the autonomous driving enabling state is configured to indicate whether a passing vehicle is allowed to enter the autonomous driving mode at the location point.

9. The method according to claim 8, wherein the driving data comprises location points of the target vehicles on the target road when existing the autonomous driving mode and trigger conditions for exiting the autonomous driving mode.

10. An apparatus for updating a map, comprising:
a determining module, configured to determine target vehicles exiting an autonomous driving mode on a target road;
an acquiring module, configured to acquire driving data of the target vehicles in a non-autonomous driving mode;
a clustering module, configured to generate at least one cluster by clustering the driving data; and
an update module, configured to update an autonomous driving enabling state of each location point of the target road on the map according to the at least one cluster, wherein the autonomous driving enabling state is configured to indicate whether a passing vehicle is allowed to enter the autonomous driving mode at the location point.

11. An apparatus for updating a map, comprising:
a collection module, configured to, in response to a vehicle exiting an autonomous driving mode, collect driving data in a non-autonomous driving mode, and send the driving data to a cloud server; and
a receiving module, configured to receive map update information generated by the cloud server according to the driving data, and update an autonomous driving enabling state of each location point of a target road on the map based on the map update information, wherein the autonomous driving enabling state is configured to indicate whether a passing vehicle is allowed to enter the autonomous driving mode at the location point.

12. An electronic device, comprising a memory and a processor, wherein the processor runs a program corresponding to an executable program code by reading the executable program code stored in the memory to implement the method according to any one of claims 1 to 9.

13. A computer-readable storage medium storing a computer program, wherein when the computer program is executed by a processor, the method according to any one of claims 1 to 9 is implemented.

14. A computer program product comprising a computer program, wherein when the computer program is executed by a processor, the method according to any one according to claims 1 to 9 is implemented.

15. A computer program comprising a computer program code, wherein when the computer program code runs on a computer, the computer is caused to perform the method according to any one of claims 1 to 9.
